# EUROPÄISCHE PATENTSCHRIFT

(11) **EP 1 850 229 B1**
(45) Veröffentlichungstag und Bekanntmachung des Hinweises auf die Patenterteilung: **10.10.2012**
(21) Anmeldenummer: 07008411.6
(22) Anmeldetag: 25.04.2007
(51) Int. Cl.: G06F 11/16, B60T 8/88, B62D 5/04, G05B 9/03, G05D 1/00

(54) **Vorrichtung und Verfahren zur Überwachung einer Funktionseinheit in einem Fahrzeug**
Device and method for controlling a functional unit in a vehicle
Dispositif et procédé de surveillance d'une unité fonctionnelle dans un véhicule

(30) Priorität: 28.04.2006 DE 102006020460
(43) Veröffentlichungstag der Anmeldung: 31.10.2007
(73) Patentinhaber: Marquardt GmbH, 78604 Rietheim-Weilheim (DE)
(72) Erfinder: Koch, Andreas, 78315 Radolfzell (DE); Bosch, Robert, 78554 Aixheim (DE); Weisser, Dietmar, 78532 Tuttlingen (DE); Gutow, Jens, 78532 Tuttlingen (DE)
(74) Vertreter: Otten, Herbert

(56) Entgegenhaltungen:
- EP-A- 1 616 746
- WO-A-01/66395
- WO-A-02/055356
- WO-A-2005/080164
- DE-A1- 19 832 167

## Beschreibung

Die Erfindung betrifft eine Vorrichtung und ein Verfahren zur Überwachung einer Funktionseinheit in einem Fahrzeug.

Zur Steuerung und/oder Regelung von zum Beispiel Lenkung, Bremse und Antrieb werden in Fahrzeugen Steuergeräte eingesetzt, welche über einen Fahrzeugbus Informationen von einer Auswerteeinheit erhalten, welche auf der Grundlage von Daten erzeugt werden, die von Sensoren ermittelt wurden. Um derartigen Funktionseinheiten eine hohe Betriebssicherheit und Fehlersicherheit zu verleihen enthalten derartige Funktionseinheiten wichtige Bestandteile mehrfach.

Aus der EP 1 616 746 A2 ist eine Vorrichtung bekannt, bei welcher intern in der Auswerteinheit die Ergebnisse der beiden Auswertungen der Sensoren verglichen werden, wobei bei Nichtübereinstimmung der Ergebnisse kein Wert auf die Datenbusse N1A bzw. N1B ausgegeben wird. Weiterhin ist aus der WO 02/055356 A1 eine Vorrichtung zur Überwachung von in einem Fahrzeug angeordneten Sensormitteln bekannt, welche zwei Pfade für die Daten der Sensoren aufweist, wobei mittels eines internen Cross-Checks ein Datenfehler vor einer Ausgabe auf den CAN-Bus erkennbar ist, wobei der Cross-Check mittels der in den Pfaden angeordneten Controller durchgeführt wird. Der Erfindung liegt die Aufgabe zugrunde, eine Vorrichtung und ein Verfahren zur Überwachung einer Funktionseinheit in einem Fahrzeug zu entwickeln, welche sich durch einen vergleichsweise geringen technischen Aufwand auszeichnet und einen Notbetrieb ermöglicht.

Diese Aufgabe wird durch die Merkmale des Vorrichtungsanspruchs 1 und des Verfahrensanspruchs 2 gelöst. In den Unteransprüchen sind vorteilhafte und zweckmäßige Weiterbildungen angegeben.

Das erfindungsgemäße Verfahren kann vorsehen, das Ergebnis von der Auswerteeinheit von dem Datenbus auszulesen bevor es von dem Steuergerät gelesen wird. Hierdurch ist eine frühzeitige Sperrung der Ausgabe von Ergebnissen durch die zweite Auswerteeinheit auf den Datenbus möglich.

Weiterhin kann das erfindungsgemäße Verfahren vorsehen, in einem Fehlerfall bereits die Ausgabe eines weiteren Ergebnisses, welches zeitlich direkt auf das von der ersten Auswerteeinheit beanstandete Ergebnis folgt, auf den Datenbus zu verhindern. Hierdurch wird sichergestellt, dass das Steuergerät maximal ein fehlerhaftes Ergebnis erhält.

Es ist vorgesehen, dass das Ausbleiben von weiteren Ergebnissen von dem Steuergerät zu einer Abarbeitung eines Notprogramms führt, durch welches das Steuergerät seine Aufgaben unabhängig von den Ergebnissen ausführt. Hierdurch kann bereits nach dem zweiten Systemtakt, in welchem die Ergebnisse übermittelt werden, das Notprogramm eingeleitet werden. Weiterhin führt auch ein Totalausfall des Auswertegeräts bzw. beider Auswerteeinheiten zum Start des Notprogramms.

Weitere Einzelheiten der Erfindung werden in der Zeichnung anhand von schematisch dargestellten Ausführungsbeispielen beschrieben.

Hierbei zeigt:
- Figur 1:: eine schematische und vereinfachte Darstellung einer erfindungsgemäßen Vorrichtung und
- Figur 2 bzw. 2a - 2d:: eine schematische und detaillierte Darstellung einer weiteren erfindungsgemäßen Vorrichtung.

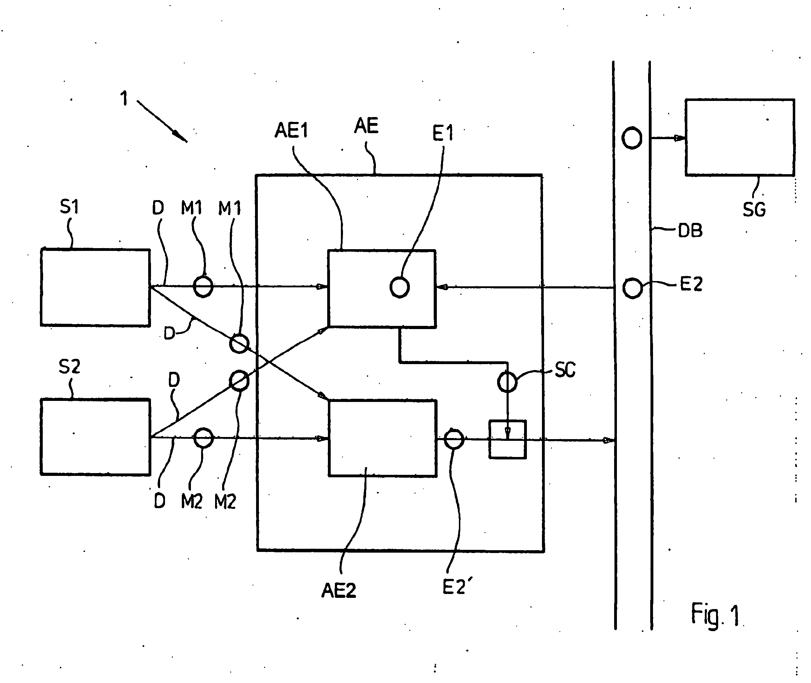

In der Figur 1 ist eine erfindungsgemäße Vorrichtung 1 schematisch und vereinfacht dargestellt. Die Vorrichtung 1 umfasst einen Datenbus DB, ein Auswertegerät AE mit einer ersten Auswerteeinheit AE1 und einer zweiten Auswerteeinheit AE2. Weiterhin umfasst die Vorrichtung 1 zwei Sensoren S1, S2 zur Erfassung beispielsweise eines Lenkwinkels oder einer Drehzahl in Form eines Messwerts M1, bzw. M2 und ein Steuergerät SG. Die erste Auswerteeinheit AE1 und die zweite Auswerteeinheit AE2 erhalten jeweils die Messwerte M1 und M2 beider Sensoren S1 und S2 über Datenleitungen D oder gemäß einer nicht dargestellten Ausführungsvariante drahtlos. Die Messwerte M1 und M2 werden in den Auswerteeinheiten AE1 und AE2 zu Ergebnissen E1 und E2 verarbeitet, wobei die Verarbeitung vorzugsweise eine Berechnung und eine Plausibilitätsprüfung umfasst. Das Ergebnis E2 der zweiten Auswerteeinheit AE2 wird auf den Datenbus DB ausgegeben. Über den Datenbus DB ist das Auswertegerät AE bzw. die zweite Auswerteeinheit AE2 mit dem Steuergerät SG verbunden. Die erste Auswerteeinheit AE1 ist zum Einlesen der Ergebnisse E2 mit dem Datenbus DB verbunden und liest das Ergebnis E2 von dem Datenbus DB ein, wenn dieses auf dem Weg zu dem Steuergerät SG ist. Das eingelesene Ergebnis E2 der zweiten Auswerteeinheit AE2 wird dann in der ersten Auswerteeinheit AE1 mit dem dort ermittelten ersten Ergebnis E1 verglichen. Sofern der Vergleich, bei welchem beispielsweise eine Abweichung der Ergebnisse E1 und E2 voneinander ermittelt und bewertet wird, die Korrektheit des Ergebnisses E2 bestätigt, wird von der Auswerteeinheit AE1 keine zusätzliche Aktion ausgeführt. Sofern der Vergleich jedoch die Korrektheit des Ergebnisses E2 nicht bestätigt, bewirkt die erste Auswerteeinheit AE1, dass die zweite Auswerteeinheit AE2 keine weiteren Ergebnisse auf den Datenbus DB ausgibt. Dies kann beispielsweise durch eine Übermittlung eines Stoppcodes SC erfolgen. Hierdurch wird dann der Zugang für jedes weitere von der zweiten Auswerteeinheit AE2 generierte Ergebnis E2' auf den Datenbus DB gesperrt bis ein Neustart des Auswertegeräts AE erfolgt. Dieser kann beispielsweise durch eine Fachwerkstatt oder bei einem Neustart des Fahrzeugs erfolgen. Im Fehlerfall ist somit gewährleistet, dass das Steuergerät SG lediglich ein fehlerhaftes Ergebnis E2 erhält. Da das Steuergerät SG in dem beschriebenen Fehlerfall nunmehr in dem vorgesehenen Systemtakt, in welchem die zweite Auswerteeinheit AE2 Ergebnisse ausgeben sollte, keine weiteren Ergebnisse erhält, startet dieses ein Notprogramm. Das Notprogramm ermöglicht dem Steuergerät SG die Erfüllung seiner Aufgaben unabhängig von den Ergebnissen E2 des Auswertegeräts AE bzw. der zweiten Auswerteeinheit AE2.

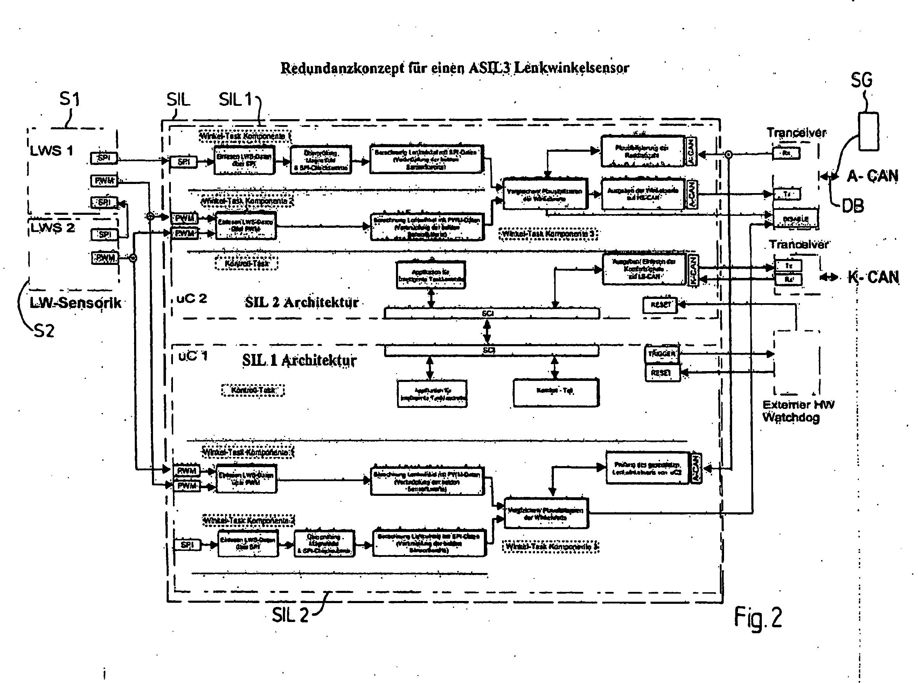

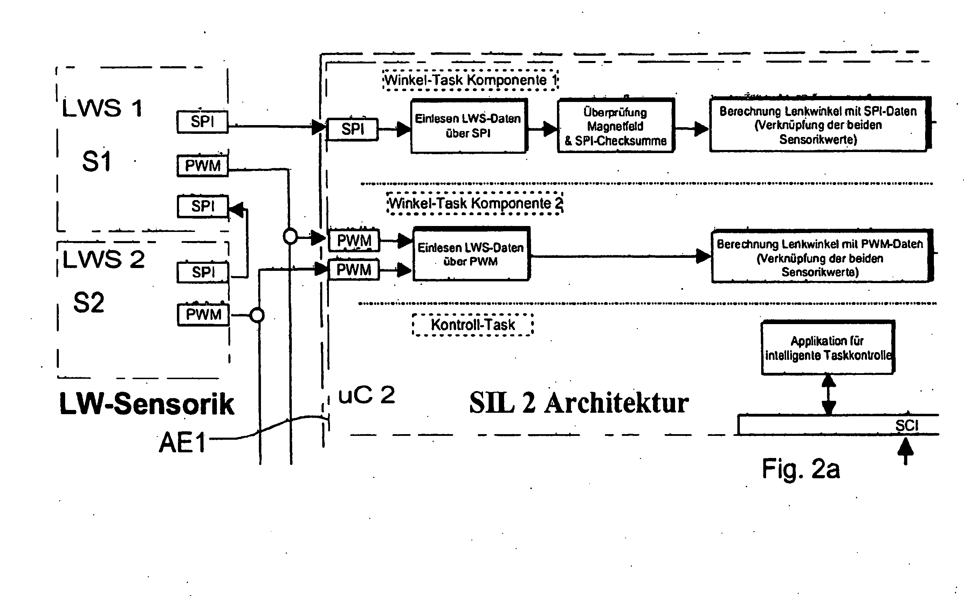

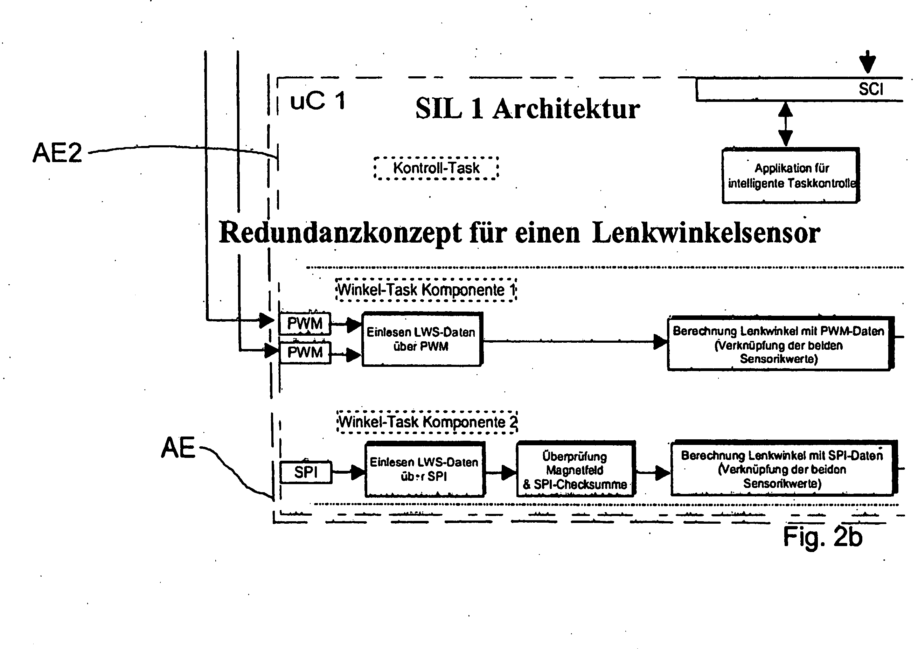

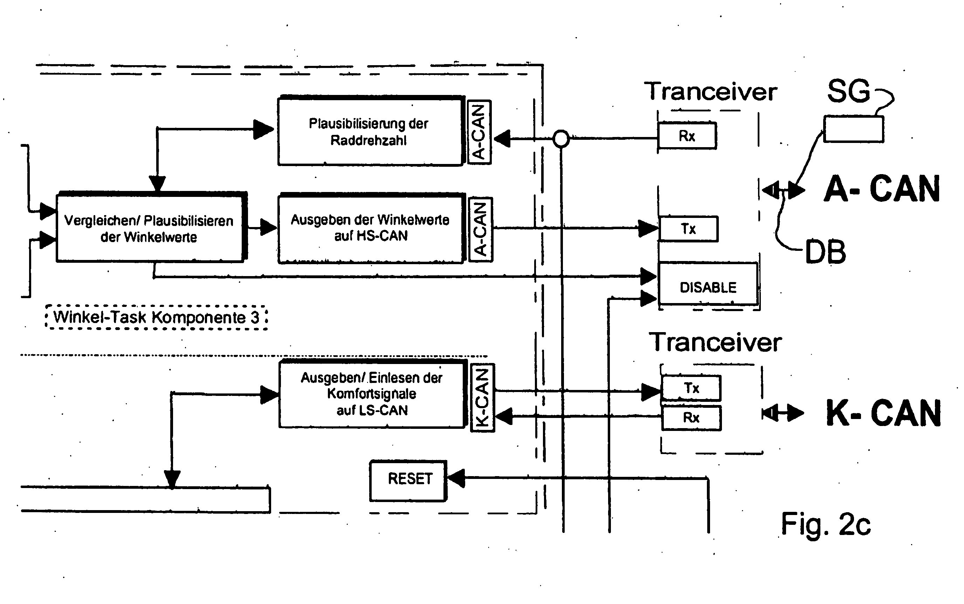

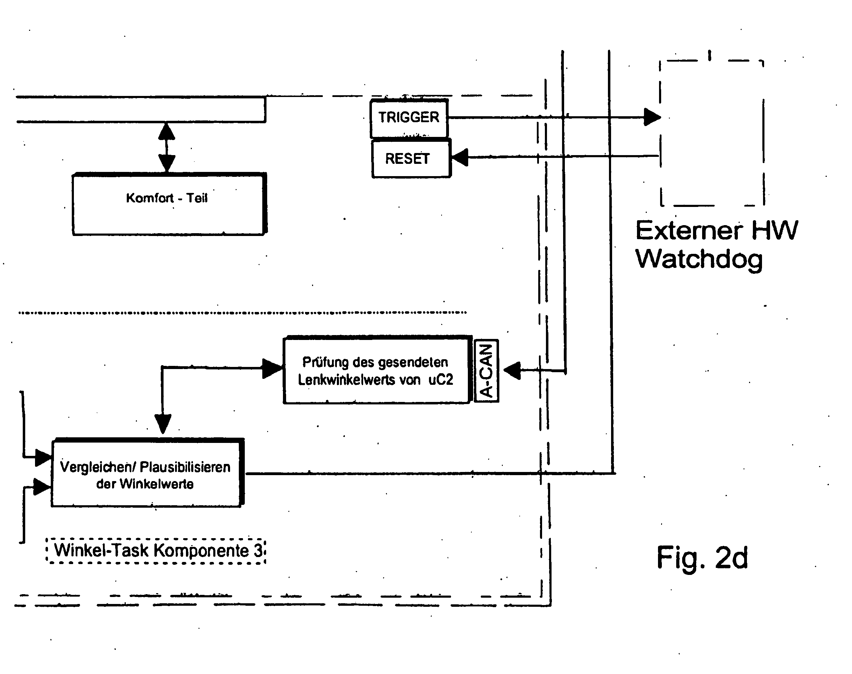

Die Figur 2 zeigt in schematischer Darstellung eine weitere erfindungsgemäße Vorrichtung 1. Durch die Figuren 2a bis 2d ist die Figur 2 zur besseren Erkennbarkeit von Details nochmals vergrößert widergegeben. Bei einer Betrachtung der Figuren 2a bis 2d ist die Figur 2a links oben, die Figur 2b links unten, die Figur 2c rechts oben und die Figur 2d rechts unten anzuordnen. Bezüglich der grundlegenden Funktionsweise der in den Figuren 2 bzw. 2a bis 2d dargestellten Vorrichtung 1 wird auf die Beschreibung zu der Figur 1 verwiesen. Weitere Details ergeben sich aus den in der Figur 2 bzw. den Figuren 2a bis 2d selbst enthaltenen schriftlichen Angaben.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

### Bezugszeichenliste:

- 1: Vorrichtung
- DB: Datenbus
- AE: Auswertegerät
- AE1: erste Auswerteeinheit von AE
- AE2: zweite Auswerteeinheit von AE
- S1: erster Sensor
- S2: zweiter Sensor
- M1: Messwert von S1
- M2: Messwert von S2
- SG: Steuergerät
- E1: Ergebnis von AE1
- E2: Ergebnis von AE2
- E2': weiteres Ergebnis von AE2
- SC: Stoppcode von AE1
- D: Datenleitung

## Patentansprüche

1. Vorrichtung zur Überwachung einer Funktionseinheit in einem Fahrzeug, wobei die Vorrichtung einen Datenbus (DB), ein Auswertegerät (AE) mit einer ersten Auswerteeinheit (AE1), einer zweiten Auswerteeinheit (AE2), wenigstens einen Sensor (S1, S2) zur Erfassung eines Messwerts (M1, M2) und ein Steuergerät (SG) umfasst, wobei jede Auswerteeinheit (AE2, AE1) mit wenigstens einem Sensor (S1, S2) verbunden ist, wobei die zweite Auswerteeinheit (AE2) zur Ausgabe von Ergebnissen (E2) über den Datenbus (DB) mit dem Steuergerät (SG) verbunden ist, wobei die erste Auswerteeinheit (AE1) zum Einlesen der auf dem Weg zu dem Steuergerät (SG) befindlichen Ergebnisse (E2) der zweiten Auswerteeinheit (AE2) mit dem Datenbus (DB) verbunden ist, wobei die Ergebnisse (E1) der ersten Auswerteeinheit (AE1) und die Ergebnisse (E2) der zweiten Auswerteeinheit (AE2) in der ersten Auswerteeinheit (AE1) vergleichbar sind und wobei eine Ausgabe von Ergebnissen (E2) auf den Datenbus (DB) durch die erste Auswerteeinheit (AE1) blockierbar ist und die Abarbeitung eines Notprogramms von dem Steuergerät (SG) bei Ausbleiben von Ergebnissen (E2) von der zweiten Auswerteeinheit (AE2) vorgesehen ist.

2. Verfahren zur Überwachung einer Funktionseinheit (FE) in einem Fahrzeug, wobei ein Datenbus (DB), ein Auswertegerät (AE) mit einer ersten Auswerteeinheit (AE1) und einer zweiten Auswerteeinheit (AE2), wenigstens ein Sensor (S1, S2) zur Erfassung eines Messwerts und ein Steuergerät (SG) zusammenwirken, wobei jede Auswerteeinheit (AE2, AE1) Daten (M1, M2) von wenigstens einem Sensor (S1, S2) erhält und aus diesen Ergebnisse (E1, E2) ermittelt, wobei die zweite Auswerteeinheit (AE2) ihr Ergebnis (E2) auf den Datenbus (DB) für das Steuergerät (SG) ausgibt, wobei die erste Auswerteeinheit (AE1) das Ergebnis (E2) der zweiten Auswerteeinheit (AE2) von dem Datenbus (DB) einliest, wenn
dieses auf dem Weg zu dem Steuergerät (SG) ist, und mit dem eigenen Ergebnis (E1) vergleicht und wobei die erste Auswerteeinheit (AE1) in einem Fehlerfall eine Ausgabe von weiteren Ergebnissen (E2') auf den Datenbus (DB) verhindert und das Ausbleiben von Ergebnissen (E2) zu einer Abarbeitung eines Notprogramms von dem Steuergerät (SG) führt, durch welches das Steuergerät (SG) seine Aufgaben unabhängig von den Ergebnissen (E2) ausführt.

3. Verfahren nach Anspruch 2, **dadurch gekennzeichnet, dass** das Ergebnis (E2) von der Auswerteeinheit (AE1) von dem Datenbus (DB) gelesen wird bevor es von dem Steuergerät (SG) gelesen wird.

4. Verfahren nach einem der Ansprüche 2 bzw. 3, **dadurch gekennzeichnet, dass** von der Auswerteeinheit (AE1) in einem Fehlerfall die Ausgabe eines Ergebnisses (E2'), welches direkt auf das Ergebnis (E2) folgt, auf den Datenbus (DB) verhindert wird.

## Claims

1. Device for monitoring a functional unit in a vehicle, in which the device comprises a data bus (DB), an evaluation device (AE) comprising a first evaluation unit (AE1), a second evaluation unit (AE2), at least one sensor (S1, S2) for determining a measurement value (M1, M2) and a control device (SG), in which each evaluation unit (AE1, AE2) is connected to at least one sensor (S1, S2), in which the second evaluation unit (AE2) for outputting results (E2) is connected via the data bus (DB) to the control device (SG), in which the first evaluation unit (AE1) for reading in the results (E2) of the second evaluation unit (AE2) on their way to the control device (SG) is connected to the data bus (DB), in which the results (E1) of the first evaluation unit (AE1) and the results (E2) of the second evaluation unit (AE2) can be compared in the first evaluation unit (AE1), and in which the output of results (E2) to the data bus (DB) can be blocked by the first evaluation unit (AE1) and an emergency program is executed by the control device (SG) if there are no results (E2) from the second evaluation unit (AE2).

2. Method for monitoring a functional unit (FE) in a vehicle, in which a data bus (DB), an evaluation device (AE) comprising a first evaluation unit (AE1) and a second evaluation unit (AE2), at least one sensor (S1, S2) for determining a measurement value and a control device (SG) operate together, in which each evaluation unit (AE2, AE1) receives data (M1, M2) from at least one sensor (S1, S2) and use these for identification of results (E1, E2), in which the second evaluation unit (AE2) sends its result (E2) to the data bus (DB) for the control device (SG), in which the first evaluation unit (AE1) reads in the result (E2) of the second evaluation unit (AE2) from the data bus (DB), when the said result is on its way to the control device (SG), and compares it with its own result (E1), and in which the first evaluation unit (AE1) in case of error prevents the output of further results (E2') to the data bus (DB) and the lack of results (E2) from leads to the execution of an emergency program, by the control device (SG) in which the control device (SG) performs its tasks independently of the results (E2).

3. Method according to claim 2, **characterised in that** the result (E2) from the evaluation unit (AE1) is read by the data bus (DB) before it is read by the control device (SG).

4. Method according to any one of claims 2 or 3, **characterised in that** in case of error the output of a result (E2'), which directly follows result (E2), to the data bus (DB) is prevented by the evaluation unit (AE1).

## Revendications

1. Dispositif pour surveiller une unité fonctionnelle d'un véhicule, dans lequel :
- le dispositif comporte un bus de donnée (DB), un appareil d'exploitation (AE) avec une première unité d'exploitation (AE1), une seconde unité d'exploitation (AE2), au moins un capteur (S1, S2) pour saisir une valeur de mesure (M1, M2) et un appareil de commande (SG),
- chaque unité d'exploitation (AE1, AE2) étant reliée à au moins un capteur (S1, S2),
- la seconde unité d'exploitation (AE2) étant reliée à l'appareil de commande (SG) par le bus de donnée (DB) pour émettre les résultats (E2),
- la première unité d'exploitation (AE1) étant reliée au bus de donnée (DB) pour enregistrer les résultats (E2) de la seconde unité d'exploitation (AE2), qui sont sur le trajet vers l'appareil de commande (SG),
- les résultats (E1) de la première unité d'exploitation (AE1) et les résultats (E2) de la seconde unité d'exploitation (AE2) peuvent être comparés dans la première unité d'exploitation (AE1), et
- la première unité d'exploitation (AE1) peut bloquer l'émission des résultats (E2) sur le bus de donnée (DB), et le traitement d'un programme de secours est prévu par l'appareil de commande (SG) en cas d'absence de résultat (E2) de la deuxième unité d'exploitation (AE2).

2. Procédé de surveillance d'une unité fonctionnelle (FE) d'un véhicule selon lequel :
- un bus de donnée (DB), une unité d'exploitation (AE) avec une première unité d'exploitation (AE1) et une seconde unité d'exploitation (AE2), au moins un capteur (S1, S2) pour saisir une valeur de mesure et un appareil de commande (SG) coopèrent,
- chaque unité d'exploitation (AE2, AE1) reçoit les données (M1, M2) d'au moins un capteur (S1, S2) et en déduit des résultats (E1, E2),
- la seconde unité d'exploitation (AE2) émettant son résultat (E2) sur le bus de donnée (DB) pour l'appareil de commande (SG),
- la première unité d'exploitation (AE1) enregistrant le résultat (E2) de la seconde unité d'exploitation (AE2) du bus de données (DB) si celui-ci est sur le trajet vers l'appareil de commande (SG) et le compare au propre résultat (E1), et
- la première unité d'exploitation (AE1), en cas de défaut, empêché d'émettre d'autres résultats (E2') sur le bus de donnée (DB) et l'absence de résultat (E2) se traduit par le traitement d'un programme de secours par l'appareil de commande (SG) par lequel l'appareil de commande (SG) exécute ses tâches indépendamment des résultats (E2).

3. Procédé selon la revendication 2,
**caractérisé en ce que**
le résultat (E2) est lu par l'unité d'exploitation (AE1) dans le bus de données (DB) avant d'être lu par l'appareil de commande (SG).

4. Procédé selon l'une des revendications 2 ou 3,
**caractérisé en ce qu'**
en cas de défaut, l'unité d'exploitation (AE1) empêché d'émettre un résultat (E2') suivant directement le résultat (E2) sur le bus de donnée (DB), .
